## Europäisches Patentamt
## European Patent Office
## Office européen des brevets

(19)

(11) Veröffentlichungsnummer : **0 052 763**
**B1**

(12)

# EUROPÄISCHE PATENTSCHRIFT

(45) Veröffentlichungstag der Patentschrift :
**03.04.85**

(21) Anmeldenummer : **81108630.5**

(22) Anmeldetag : **21.10.81**

(51) Int. Cl.⁴ : **C 09 D   3/80**, C 09 D   3/81,
B 41 M   1/34, B 44 C   1/16,
C 09 D 11/10

(54) **Verfahren zum Direktdruck von keramischen Farben sowie Druckmedium hierfür.**

---

(30) Priorität : **20.11.80 DE 3043741**

(43) Veröffentlichungstag der Anmeldung :
**02.06.82 Patentblatt 82/22**

(45) Bekanntmachung des Hinweises auf die Patenterteilung : **03.04.85 Patentblatt 85/14**

(84) Benannte Vertragsstaaten :
**AT BE CH DE FR GB IT LI NL SE**

(56) Entgegenhaltungen :
**DE-A- 2 224 277**
**Die Akte enthält technische Angaben, die nach dem
Eingang der Anmeldung eingereicht wurden und die
nicht in dieser Patentschrift enthalten sind.**

(73) Patentinhaber : **AGROB ANLAGENBAU GMBH
Münchener Str. 101
D-8045 Ismaning (DE)**

(72) Erfinder : **Rumbach, Karl Fr., Dipl.-Ing.
Liesingstrasse 6
D-6450 Hanau 9 (DE)**

(74) Vertreter : **Tetzner, Volkmar, Dr.-Ing. Dr. Jur.
Van-Gogh-Strasse 3
D-8000 München 71 (DE)**

EP 0 052 763 B1

# 0 052 763

**Beschreibung**

Die Erfindung betrifft ein Verfahren entsprechend dem Oberbegriff des Anspruches 1. Die Erfindung betrifft ferner ein Druckmedium für ein solches Verfahren.

Bei den bekannten Verfahren finden lösungsmittelhaltige Druckmedien Verwendung, die zwecks Aushärtung nach jeder Farblage umständlich getrocknet werden müssen. Die Trocknungsdauer liegt zwischen 20 und 60 Minuten (und darüber) je Farblage. Der notwendige Trocknungsprozeß ist daher zeit-, energie- und investitionsaufwendig. Beim Trocknungsprozeß entstehen ferner in der Abluft Lösungsmitteldämpfe, die einerseits einen Substanzverlust aus den Druckmedien darstellen und andererseits schon aus Gründen des Umweltschutzes durch aufwendige Verfahren entfernt oder zurückgewonnen werden müssen. Bedingt durch die Notwendigkeit, nach jeder Farblage einen Trocknungsvorgang zwischenzuschalten, ergeben sich ferner eine Reihe aufwendiger Zwischenlagerungs- und Einpassungsprobleme.

Es sind weiterhin Verfahren bekannt, die mit polymeren Druckmedien (thermoplastischen Anpastmedien) arbeiten. Sie erfordern zwar keine Trocknung, sind jedoch nur in begrenztem Maße anwendbar, und zwar hauptsächlich bei verhältnismäßig anspruchslosen Dekorationen, die nach dem Siebdruckverfahren aufgebracht werden.

Bekannt sind ferner auch Verfahren unter Verwendung UV-härtbarer Druckmedien. Sie sind jedoch bisher nur für die Herstellung von Farbdrucken einsetzbar, die nachher nicht mehr eingebrannt werden müssen. Sie besitzen eine so harte Lackschicht, daß ein Einbrennen zu einem schwarzen Rückstand führen würde.

Zum Stand der Technik gehört schließlich ein Verfahren zum Herstellen einer Filmfolie (Lackmaske) auf Dekorbildern (DE-A-2 224 277), bei dem monomere Metacrylate auf Dekorbildern aufgebracht und mittels UV-Bestrahlung auspolymerisiert werden.

Der Erfindung liegt die Aufgabe zugrunde, ein Verfahren der im Oberbegriff des Anspruches 1 vorausgesetzten Art so auszubilden, daß es sich durch große Wirtschaftlichkeit und vielseitige Verwendung, auch für anspruchsvolle Dekorationen, auszeichnet.

Diese Aufgabe wird erfindungsgemäß durch die kennzeichnenden Merkmale des Anspruches 1 gelöst.

Bei dem erfindungsgemäßen Verfahren werden einerseits die Vorteile UV-härtbarer Druckmedien erzielt, während andererseits beim Einbrennvorgang keine Beeinträchtigung der ausgehärteten Dekorationen aus keramischen Farben entsteht.

Die erfindungsgemäßen, UV-härtbaren Druckmedien ermöglichen sehr kurze Aushärtungszeiten der Farbschichten (von 1 bis 20 sec), ohne daß dabei — wie im herkömmlichen Trocknungsprozeß — Lösungsmitteldämpfe frei werden. Gleichzeitig entstehen auf den betreffenden Gegenständen vor dem Einbrennprozeß ausgehärtete, widerstandsfähige und manipulationsgerechte Dekore. Durch die spezielle Zusammensetzung der Druckmedien wird eine UV-Polymerisation gewährleistet, so daß beim Einbrennprozeß die Formen, die Oberflächenstruktur, der Oberflächenglanz, die Farbnuancen der keramischen Dekoration nicht zerstört werden. Die vollständige thermische Zersetzung der Druckmedien und das Entweichen der Zersetzungsprodukte erfolgt in einer vorbestimmten Brandordnung, die erfindungsgemäß auf das Schmelzverhalten der keramischen Farben und einer evtl. Trägerglasur abgestimmt ist.

Da bei dem erfindungsgemäßen Verfahren sehr kurze Aushärtungs- bzw. Polymerisationszeiten erzielt werden, kann ein Mehrfarbendruck unmittelbar nacheinander, ohne zwischenzeitliches Trocknen oder Zwischenlagern und ohne neue Einpassung in die Druckmaschine erfolgen, nachdem eine UV-Härtung zwischen zwei aufeinanderfolgenden Druckstationen durchführbar ist. Der Zeit-, Energie-, Raum- und Investitionsaufwand bekannter Trocknungsverfahren wird vermieden. Aufwendige Einrichtungen für Zwischenlagerung kommen in Fortfall. Bei den Druckanlagen wird eine höhere Produktivität erzielt. Die bei lösungsmittelhaltigen Druckmedien vorhandenen Abluftprobleme werden vermieden.

Zur Erläuterung des erfindungsgemäßen Verfahrens seien im folgenden die Komponenten (sowie einige Beispiele dieser Komponenten) der Druckmedien genannt, die sich bei den Versuchen als optimal erwiesen haben.

Die Druckmedien für die Herstellung von Farbpasten aus keramischen Farben besitzen erfindungsgemäß folgende Zusammensetzung :

|  |  |
|---|---|
| $a_1$) Präpolymere acrylierter | |
| Polyester | 10-50 % |
| vorzugsweise | 25-45 % |
| | |
| $a_2$) Diäthylenglykoldiacrylat, Tri- oder | |
| Tetraäthylenglykoldiacrylat oder Trimethylolpropantriacrylat | 2-40 % |
| vorzugsweise | 20-40 % |
| | |
| $a_3$) Polymeth eines Molekulargewichts von 95 000 bis 150 000, wie | |
| Degalan LP 62/03 oder LM 62/11 (Degussa) oder Plexigum P 26 | 1-30 % |
| vorzugsweise | 5-15 % |

2

a$_4$) Monomere von Methacrylaten, wie n- und iso-Butilmethacrylat oder 2-Äthylhexilmethacrylat    0-45 %
vorzugsweise    5-10 %

a$_5$) monomere und polymere Weichmascher, wie Dibutilphtalat, Dioctilphtalat, Dioctiladipat ; Palamoll 646 (BASF) oder Unem 9507 (Unilever-Emery, Holland) ;    0-20 %
vorzugsweise    1- 5 %

a$_6$) monomere Lösungen von Alkydharzen, wie Hercolyn D (Hercules Incorp., USA) oder Alftalat (Höchst AG)    0-10 %
vorzugsweise    1- 5 %

a$_7$) Photoinitiatorsysteme der Klassen Ketale, Acrylketone oder Benzophenone und dergleichen, wie Benzildimethylketal, Benzophenon und tertiäre Amine, Benzoinäthyläther    1-10 %
vorzugsweise    1- 6 %

wobei die Summe der Komponenten a$_3$ + a$_4$ + a$_5$ + a$_6$ mindestens 5 % und die Summe aller verwendeten Komponenten a$_1$ bis a$_7$ ingesamt 100 % beträgt.

Die Herstellung der Farbpaste erfolgt durch Zufügung einer keramischen Farbe zum Druckmedium und die Aushärtung der als Schicht aufgedruckten Farbpaste mittels UV-Strahlung.

Im Einzelfall muß die Zusammensetzung der Druckmedien (innerhalb der oben genannten Bereiche) vor allem folgenden Einflußfaktoren angepaßt werden :

— Druckverfahren und Drucktechnik,
— Farblage,
— Anpastverhältnis,
— chemische Zusammensetzung der Farben und Pigmente,
— Oberflächenmerkmale der Farben und Pigmente,
— Härtungsdauer,
— Einbrenntemperatur und -dauer.

Über die jeweilige Zusammensetzung des Druckmediums wird die UV-Reaktionsfähigkeit reguliert ; der gegebenenfalls inhibierenden Wirkung von keramischen Farben und sonstigen Füllstoffen und Pigmenten wird über die Zusammensetzung des Druckmediums entgegengewirkt.

Das Anpastverhältnis von Farbe zu Druckmedium kann zwischen 10 : 3 und 10 : 12 liegen ; die erzielte Viskosität erlaubt ein Verdrucken mit jeder herkömmlichen Technik. Die Farbschichten für die UV-Härtung können also beispielsweise durch Hoch-, Tief-, Offset-, Sieb-, Membran-, Stempeldruck und dgl. hergestellt werden.

Die Standzeit der angepasteten Farben im druckreifen Zustand kann 2 bis 8 Stunden und mehr betragen.

Der Härtungsprozeß läßt sich diskontinuierlich oder kontinuierlich durchführen. Dabei ist vorteilhaft, daß bei der UV-Härtung oder -Polymerisation praktisch keine Dämpfe entstehen und daß die ausgehärtete Farbschicht wasserunlöslich ist.

Der Wellenlängenbereich der UV-Strahlung liegt zweckmäßig zwischen 280 und 410 nm ; die spezifische Leistung der UV-Strahlung beträgt 20 bis 180 W/cm$^2$.

Für eine Aushärtungs- oder Polymerisationszeit der einzelnen Farbschichten von 1 bis 20 sec liegt die Leistung der UV-Strahler zwischen 200 und 10 000 W.

Der Dampfdruck der Farbpasten beträgt bei dem erfindungsgemäßen Verfahren bei 20 °C nicht über 0,5 mm Hg. Die ermöglicht ein relativ geruchsfreies Arbeiten mit langer Topfzeit.

Die erfindungsgemäßen Druckmedien ermöglichen nach Anpastung mit keramischen Farben und Aushärtung eine Einbrennung auf Glas und glasierten oder unglasierten Gegenständen aus Keramik oder Metall bei 500 bis 1 400 °C, ohne daß die Form, die Oberflächenstruktur, der Oberflächenglanz, die Farbnuancen der Dekoration und andere wesentliche Eigenschaften beeinträchtigt werden.

Zur weiteren Erläuterung der Erfindung diene folgendes

Beispiel

Es wird ein Druckmedium mit folgender Zusammensetzung präpariert :

a$_1$)   45 %
a$_2$)   35 %
a$_3$)   10 %
a$_4$)   2 %
a$_5$)   2 %
a$_6$)   2 %
a$_7$)   4 %

Die Herstellung des Druckmediums erfolgt so, daß zuerst die Komponenten $a_1$) und $a_2$) homogen miteinander vermischt werden. Erst dann wird die Komponente $a_3$) dazugegeben. Zweckmäßig wird die Komponente $a_3$) in kleineren Chargen dem Gemisch beigefügt. Da sich die Komponente $a_3$) relativ schwer in der Mischung von $a_1$) und $a_2$) löst, muß dies unter ständigem Rühren erfolgen, was 0,5 bis 4 Stunden dauern kann. Dieser Lösungsvorgang kann beschleunigt werden, indem das Mischgefäß durch den Mantel auf maximal 30 bis 40 °C erwärmt wird.

Nach der vollständigen Auflösung der Komponente $a_3$) werden die restlichen Komponenten — außer $a_7$) — unter ständigem Rühren hinzugefügt. Die so erhaltene Lösung soll einige Stunden bis einige Tage vor der Verwendung verweilen. Vor der Verwendung muß die Lösung klar sein.

Die Komponente $a_7$) wird unmittelbar vor der Anpastung des Druckmediums eingemischt. Das mit der Komponente $a_7$) versehene Gemisch wird in einem lichtgeschützten Gefäß aufbewahrt.

Zu dem so hergestellten Druckmedium wird eine keramische Farbe (Kollektion 16, Degussa AG) im Verhältnis 10 Teile Farbe und 5 Teile Druckmedium hinzugefügt und durch Spachtelverarbeitung gut homogenisiert. Diese Farbpaste wird dann im Siebdruck-Verfahren (Drucksieb : 77 Nylon) auf eine glasierte Wandfliese aufgetragen.

Die UV-Härtung erfolgt in maximal 10 sec mit einem UV-Gerät der Leistung 5 kW (Violux 5002 S). Nach der Aushärtung wird der Aufdruck gebrannt. Der Brennvorgang erfolgt in einem Elektro-Ofen (Marke Naber), wobei die Temperaturkurve automatisch gesteuert wird. Die Brenndauer beträgt 8 Stunden, die maximale Temperatur 1 060 °C. Die Aufheizzeit beträgt 4 Stunden, die Verweilzeit bei der maximalen Temperatur 30 Minuten.

Nach dem Brandvorgang ist auf der glasierten Steingutfliese eine einwandfreie Dekoration entstanden.

Alle Prozentangaben sind als Gewichtsangaben zu verstehen.

**Ansprüche**

1. Verfahren zum Direktdruck von keramischen Farben auf Glas und glasierten oder unglasierten Gegenständen aus Keramik oder Metall oder dergleichen unter Anwendung von polymeren Druckmedien und einer Einbrenntemperatur zwischen 500 und 1 400 °C, gekennzeichnet durch

a) Verwendung von Druckmedien für die Herstellung von Farbpasten aus keramischen Farben, mit folgender Zusammensetzung der Druckmedien :

| | |
|---|---|
| $a_1$) Präpolymere acrylierter Polyester | 10-50 % |
| $a_2$) Diäthylenglykoldiacrylat, Tri- oder Tetraäthylenglykoldiacrylat oder Trimethylolpropantriacrylat | 2-40 % |
| $a_3$) Polymethacrylate eines Molekulargewichts von 95 000 bis 150 000 | 1-30 % |
| $a_4$) Monomere von Methylcrylaten | 0-45 % |
| $a_5$) monomere und polymere Weichmacher | 0-20 % |
| $a_6$) monomere Lösungen von Alkydharzen | 0-10 % |
| $a_7$) Photoinitiatorsysteme der Klassen Ketale, Acrylketone oder Benzophenone | 1-10 % |

wobei die Summe der Komponenten $a_3 + a_4 + a_5 + a_6$ mindestens 5 % und die Summe aller verwendeten Komponenten $a_1$ bis $a_7$ 100 % beträgt ;

b) Herstellung einer Farbpaste durch Zufügung einer keramischen Farbe zum Druckmedium gemäß a) und Aushärtung der als Schicht aufgedruckten Farbpaste mittels UV-Strahlung.

2. Verfahren nach Anspruch 1, gekennzeichnet durch folgende Zusammensetzung der Druckmedien :

| | |
|---|---|
| Komponente $a_1$) | 25-45 % |
| Komponente $a_2$) | 20-40 % |
| Komponente $a_3$) | 5-15 % |
| Komponente $a_4$) | 5-10 % |
| Komponente $a_5$) | 1- 5 % |
| Komponente $a_6$) | 1- 5 % |
| Komponente $a_7$) | 1- 6 % |

wobei die Summe der Komponenten $a_3 + a_4 + a_5 + a_6$ mindestens 5 % beträgt.

3. Verfahren nach Anspruch 1, dadurch gekennzeichnet, daß der Wellenlängenbereich der UV-Strahlung zwischen 280 und 410 nm liegt und die spezifische Leistung zwischen 20 und 180 W/cm² beträgt.

4. Verfahren nach Anspruch 1, dadurch gekennzeichnet, daß für eine Aushärtungs- oder Polymerisationszeit der einzelnen Farbschichten von 1 bis 20 sec die Leistung der UV-Strahler zwischen 200 und 10 000 W liegt.

5. Verfahren nach Anspruch 1, dadurch gekennzeichnet, daß der Dampfdruck der Farbpasten bei 20 °C nicht über 0,5 mm Hg beträgt.

6. Druckmedium zur Herstellung von Farbpasten aus keramischen Farben nach dem Verfahren gemäß Anspruch 1, gekennzeichnet durch eine Zusammensetzung gemäß Anspruch 2.

**Claims**

1. A process for the direct printing of ceramic pigments onto glass and glazed or unglazed articles of ceramics, metals or the like, using polymeric printing media and a baking temperature in the range from 500 to 1 400 °C, characterised in that

a) printing media for the preparation of pigment pastes from ceramic pigments are used, said printing media having the following composition :

| | |
|---|---|
| $a_1$) prepolymers of acrylic polyester | 10 to 50 % |
| $a_2$) diethylene glycol diacrylate, triethylene glycol diacrylate, tetraethylene glycol diacrylate or trimethylol propane triacrylate | 2 to 40 % |
| $a_3$) polymethacrylate with a molecular weight between 95.000 and 150.000 | 1 to 30 % |
| $a_4$) monomeres of methacrylates | 0 to 45 % |
| $a_5$) monomeric and polymeric plasticisers | 0 to 20 % |
| $a_6$) monomeric solutions of alkyd resins | 0 to 10 % |
| $a_7$) photoinitiator systems of the class consisting of ketals, acrylketones and benzophenones | 1 to 10 % |

the sum of components $a_3 + a_4 + a_5 + a_6$ amounting to at least 5 % and the sum of all components $a_1$ to $a_7$ amounting to 100 % ;

b) the pigment paste is produced by adding a ceramic pigment to the printing medium according a) and the pigment paste printed as a layer is hardened by UV-light.

2. A process as claimed in claim 1, characterised by the following composition of the printing media :

| | |
|---|---|
| component $a_1$) | 25 to 45 % |
| component $a_2$) | 20 to 40 % |
| component $a_3$) | 5 to 15 % |
| component $a_4$) | 5 to 10 % |
| component $a_5$) | 1 to 5 % |
| component $a_6$) | 1 to 5 % |
| component $a_7$) | 1 to 6 % |

the sum of components $a_3 + a_4 + a_5 + a_6$ amounting to at least 5 %.

3. A process as claimed in claim 1, characterised in that the wavelength range of the UV-light is between 280 and 410 nm and the specific output of the UV-light source is between 20 and 180 W/cm².

4. A process as claimed in claim 1, characterised in that the output of the UV-radiators is between 200 and 10 000 W for hardening or polymerising the individual pigment layers in a time between 1 and 20 seconds.

5. A process as claimed in claim 1, characterised in that the vapour pressure of the pigment pastes at 20 °C is not more 0,5 mm Hg.

6. A printing medium for preparing pigment pastes from ceramic pigments according to the process of claim 1, characterised by a composition according claim 2.

**Revendications**

1. Procédé d'impression directe de couleurs céramiques sur du verre et des objets vitrifiés ou non vitrifiés de céramique ou de métal ou analogue à l'aide de milieux d'impression polymères et avec une température de cuisson comprise entre 500 et 1 400 °C, caractérisé par :

a) utilisation de milieux d'impression destinés à la préparation de pâtes de couleurs céramiques et ayant la composition suivante

| | |
|---|---|
| $a_1$) prépolymères de polyester acrylique | 10-50 % |
| $a_2$) diacrylate de diéthylèneglycol, diacrylate de triéthylèneglycol ou de tétraéthylèneglycol ou triacrylate de triméthylolpropane | 2-40 % |
| $a_3$) polyméthacrylates d'un poids moléculaire de 95 000 à 150 000 | 1-30 % |
| $a_4$) monomères de méthacrylates | 0-45 % |
| $a_5$) plastifiants monomères et polymères | 0-20 % |
| $a_6$) solutions monomères des résines alkydes | 0-10 % |
| $a_7$) initiateurs photochimiques des classes cétales, acrylcétones ou benzophénones | 1-10 % |

la somme des constituants $a_3 + a_4 + a_5 + a_6$ représentant au moins 5 % et la somme de tous les constituants utilisés $a_1$ à $a_7$ représentant 100 % ;

b) la préparation d'une pâte de couleur par addition d'une couleur céramique au milieu d'impression selon a) et durcissement aux ultraviolets de la pâte de couleur déposée par impression sous forme de couche.

2. Procédé selon la revendication 1, caractérisé par la composition suivante des milieux d'impression :

| | |
|---|---|
| constituants $a_1$) | 25-45 % |
| constituants $a_2$) | 20-40 % |
| constituants $a_3$) | 5-15 % |
| constituants $a_4$) | 5-10 % |
| constituants $a_5$) | 1- 5 % |
| constituants $a_6$) | 1- 5 % |
| constituants $a_7$) | 1- 6 % |

La somme des constituants $a_3 + a_4 + a_5 + a_6$ représentant au moins 5 %.

3. Procédé selon la revendication 1, caractérisé en ce que la plage de la longueur d'onde des ultraviolets est comprise entre 280 et 410 nm et la puissance spécifique est comprise entre 20 et 180 W/cm².

4. Procédé selon la revendication 1, caractérisé en ce que, pour une durée de durcissement ou de polymérisation des différentes couches de couleurs de 1 à 20 s, la puissance de l'appareil de projection des ultraviolets est comprise entre 200 et 10 000 W.

5. Procédé selon la revendication 1, caractérisé en ce que la tension de vapeur des pâtes de couleurs ne dépasse pas 0,5 mm Hg à 20 °C.

6. Milieu d'impression pour la préparation de pâtes de couleurs suivant le procédé selon la revendication 1, caractérisé par une composition selon la revendication 2.